(19) Europäisches Patentamt

European Patent Office

Office européen des brevets

(11) EP 1 316 533 A2

(12) EUROPEAN PATENT APPLICATION

(43) Date of publication:
04.06.2003 Bulletin 2003/23

(51) Int Cl.$^7$: C02F 3/10, C02F 3/30

(21) Application number: 02026501.3

(22) Date of filing: 27.11.2002

(84) Designated Contracting States:
AT BE BG CH CY CZ DE DK EE ES FI FR GB GR IE IT LI LU MC NL PT SE SK TR
Designated Extension States:
AL LT LV MK RO SI

(30) Priority: 03.12.2001 JP 2001369099

(71) Applicant: Nisshinbo Industries, Inc.
Tokyo (JP)

(72) Inventors:
• Sato, Takaya
Midori-ku, Chiba-shi, Chiba (JP)
• Uehara, Tsutomu
Midori-ku, Chiba-shi, Chiba (JP)
• Matsumura, Yoshiyuki
Midori-ku, Chiba-shi, Chiba (JP)

(74) Representative: Leifert & Steffan
Patentanwälte,
Burgplatz 21-22
40213 Düsseldorf (DE)

(54) Chemical-resistant bioreactor carrier, processes for producing the carrier and use of the carrier

(57) The present invention provide: a bioreactor carrier having a suitable water swelling property, a suitable degree of volumetric swelling and a suitable specific gravity as well as exhibiting high chemical resistance to be suitable for use in the microbial treatment of organic waste water having a high chemical content; processes for efficiently producing the bioreactor carrier; and use of the bioreactor carrier. More specifically, there are provided: a chemical-resistant bioreactor carrier comprising (A) a specific water-swellable thermoplastic resin and (B) a specific resin compatible with the water-swellable thermoplastic resin (A), and as the case may be, (C) an inorganic filler, characterized in that the degree of volumetric swelling of the carrier is controlled to within a range of 120 to 3,000% and that the specific gravity of the carrier on swelling in water is controlled to within a range of 0.98 to 2.12; processes for efficiently producing the chemical-resistant bioreactor carrier; and a denitrification process for organic waste water having a high chemical content, characterized in that the chemical-resistant bioreactor carrier is used as a microbe immobilization carrier in the microbial nitrification and denitrification of nitrogenous components in the organic waste water.

Fig. 1

**Description**

BACKGROUND OF THE INVENTION

1. Field of the Invention

The present invention relates to a chemical-resistant bioreactor carrier, processes for producing the bioreactor carrier and use of the bioreactor carrier. More particularly, the present invention relates to a bioreactor carrier having a suitable water swelling property, a suitable degree of volumetric swelling and a suitable specific gravity as well as exhibiting high chemical resistance to be suitable for use in the microbial treatment of organic waste water having a high chemical content, processes for efficiently producing the bioreactor carrier and a process for effectively treating organic waste water with microbial denitrification by the use of the bioreactor carrier.

2. Description of the Related Art

Bioreactor carriers can be broadly classified into porous carriers and gel carriers.

There are known as the porous carriers, those made of polyurethane, cellulose, polypropylene, polyvinyl formal, ceramic etc., respectively. These porous carriers each have large surface areas due to the porous structures thereof, and are often used with animal cells, plant cells, microbes and/or protozoans being bindingly immobilized onto the porous surfaces of the carriers. However, the porous carriers suffer from the following various disadvantages and drawbacks. The polyurethane and polypropylene porous carriers are hydrophobic so that the carriers have poor fluidity in water and make it difficult for animal cells, plant cells, microbes and/or protozoans to be bonded thereto. The cellulose porous carriers are prone to be attacked by microbes whereby their service life is unfavorably shortened. The polyvinyl formal porous carriers pose such a defect that the industrial production process thereof is not yet established. The ceramic porous carriers cannot be fluidized in water due to their high specific gravity, thereby inevitably restricting the use thereof.

On the other hand, there are known as the gel carriers, those made of polyacrylamide, polyethylene glycol, polyvinyl alcohol and alginic acid, thermoplastic water-absorbing gels (refer to Japanese Patent Application Laid-Open No. 136980/1998 (Heisei-10)) etc., respectively. These gel carriers are commonly used with animal cells, plant cells, microbes and/or protozoans being entrappingly immobilized at the inside of the gel, and can be also used with animal cells, plant cells, microbes and/or protozoans being bindingly immobilized onto the gel surfaces.

The gel carriers, which highly contain water, have a high affinity for living matters and give favorable habitats to animal cells, plant cells, microbes and/or protozoans. However, the gel carriers made of polyacrylamide, polyethylene glycol, polyvinyl alcohol and alginic acid do not always have sufficient physical strength so that there arise a possibility of wear and collapse in the course of service in reaction tanks. In addition, the above gel carriers, when once molded into a definite shape, cannot be changed to a different shape by remelting. These gel carriers are thus generally formed into a required shape by cutting, although the cutting of water-containing and swollen gel into a several-millimeter sized regular hexahedron is labor- and time-consuming. Accordingly, the production process of these gel carriers is extremely complicated and causes increases in production time and cost.

As opposed to the foregoing, the thermoplastic water-absorbing gel carriers that are typified by thermoplastic water-absorbing polyurethane gel carriers have such advantages as a high physical strength, the capability of being industrially mass produced, hydrophilicity to adsorb thereon animal cells, plant cells, microbes and/or protozoans without causing a deterioration in their physiological activities, resistance to attack by microbes and the like. For these reasons, the thermoplastic water-absorbing gel carriers are suitably used as bioreactor carriers.

In these thermoplastic water-absorbing gel carriers, the degree of volumetric swelling thereof is one of important gel characteristics. For instance, when the degree of volumetric swelling is too low, the water absorbability of the carriers becomes so low as to deteriorate the adhesion of microbes. When the degree of volumetric swelling is too high, the carriers are deteriorated in physical strength, durability and/or endurance in practical application.

In the treatment of organic waste water having a high chemical content, such as general household waste water, specific industrial waste water and landfill soakage, there is a demand for high chemical resistance. It is thus not usual to use the above-mentioned bioreactor carriers, especially the water-containing gel carriers in the treatment of such organic waste water, but usual to use those made of polyethylene, polypropylene and/or the like that are resistant to hypochlorite, acid and alkali.

SUMMARY OF THE INVENTION

In such circumstances, it is an object of the present invention to provide a bioreactor carrier having a suitable water swelling property, a suitable degree of water swelling and a suitable specific gravity as well as exhibiting high chemical-resistance to be suitable for use in the microbial treatment of organic waste water having a high chemical content, processes for efficiently producing the bioreactor carrier and use of the bioreactor carrier. Other objects of the present invention will also become obvious from the text of this specification hereinafter disclosed.

In order to achieve the above-mentioned objects, research and investigation were intensively and extensively accumulated by the present inventors. As a result, it has been found that there is obtainable a chemical-resistant bioreactor carrier having a degree of volumetric swelling controlled within a specific range or a degree of volumetric swelling and a specific gravity controlled within specific ranges, respectively, as well as exhibiting high chemical resistance, by blending a specific water-swellable thermoplastic resin with a specific resin compatible therewith at the time of molding and, as the case may be, further with an inorganic filler at the time of producing the water-swellable thermoplastic resin and/or at the time of molding; and thereafter extruding the mixed resin into a desirable form by means of an extruder. It has also been found that organic waste water with a high chemical content can effectively be purified by the microbial nitrification and denitrification of nitrogenous components in the organic waste water by the use of the above chemical-resistant bioreactor carrier as a microbe immobilization carrier. The present invention has been accomplished on the basis of such findings and information.

That is to say, the present invention includes the following aspects.

(1) A chemical-resistant bioreactor carrier, comprising:

(A) a water-swellable thermoplastic resin selected from the group consisting of:

(A1) a polyurethane resin prepared by the reaction of diphenylmethane diisocyanate and polyethylene glycol having a molecular weight of 3,000 to 12,000 with or without 1,4-butanediol;
(A2) a cross-linked N-vinylacetamide polymer or copolymer;
(A3) a nonionic polyalkyleneoxide-based thermoplastic resin; and
(A4) a cross-linked acrylate polymer; and

(B) a resin compatible with the water-swellable thermoplastic resin (A), selected from the group consisting of:

(B1) a polyether-based elastomer;
(B2) a polyester-based elastomer;
(B3) an ethylene-acrylic acid copolymer; and
(B4) acid-modified polyethylene,

wherein the degree of volumetric swelling of the carrier is controlled to within a range from 120 to 3,000.

(2) The chemical-resistant bioreactor carrier of the above (1), further comprising (C) an inorganic filler, wherein the specific gravity of the carrier upon swelling in water is controlled to within a range of 0.98 to 2.12.

(3) The chemical-resistant bioreactor carrier of the above (2), wherein the inorganic filler (C) has an average particle size of 0.1 to 50 μm and a specific gravity of 1.5 or more.

(4) The chemical-resistant bioreactor carrier of the above (2), wherein the inorganic filler (C) is contained in an amount of 1 to 350 parts by weight per 100 parts by weight of the total sum of the resins (A) and (B).

(5) The chemical-resistant bioreactor carrier of the above (1), wherein the weight ratio of the resin (A) to the resin (B) falls within a range of 90 : 10 to 10 : 90.

(6) A production process of a chemical-resistant bioreactor carrier having a degree of volumetric swelling controlled to within a range of 120 to 3,000%, the process comprising the steps of: blending the water-swellable thermoplastic resin (A) as in the above (1) with the compatible resin (B) as in the above (1); heat melting a resultant blend; extruding the melted blend into the form of a strand by means of an extruder; and continuously cutting the strand.

(7) A production process of a chemical-resistant bioreactor carrier having a degree of volumetric swelling controlled to within a range of 120 to 3,000% and a specific gravity upon swelling in water controlled to within a range of 0.98 to 2.12, the process comprising the steps of: blending the water-swellable thermoplastic resin (A) as in the above (1), the compatible resin (B) as in the above (1) and an inorganic filler (C); heat melting a resultant blend; extruding the melted blend into the form of a strand by means of an extruder; and continuously cutting the strand.

(8) A production process of a chemical-resistant bioreactor carrier having a degree of volumetric swelling controlled to within a range of 120 to 3,000% and a specific gravity upon swelling in water controlled to within a range of 0.98 to 2.12, the process comprising the steps of: blending the water-swellable thermoplastic resin (A) as in the above (1) in which an inorganic filler is added at the time of producing the resin (A), with the compatible resin (B) as in the above (1) or with the compatible resin (B) as in the above (1) and an inorganic filler; heat melting a resultant blend; extruding the melted blend into the form of a strand by means of an extruder; and continuously cutting the strand.

(9) A process for purifying organic waste water having a high chemical content by microbial nitrification and denitrification of nitrogenous components in the organic waste water, wherein the chemical-resistant bioreactor carrier as in the above (1) is used as a microbe immobilization carrier.

(10) The process according to the above (9), wherein the bioreactor carrier as in the above (1) is used repeatedly and alternately in the nitrification and the denitrification.

BRIEF DESCRIPTION OF THE DRAWING

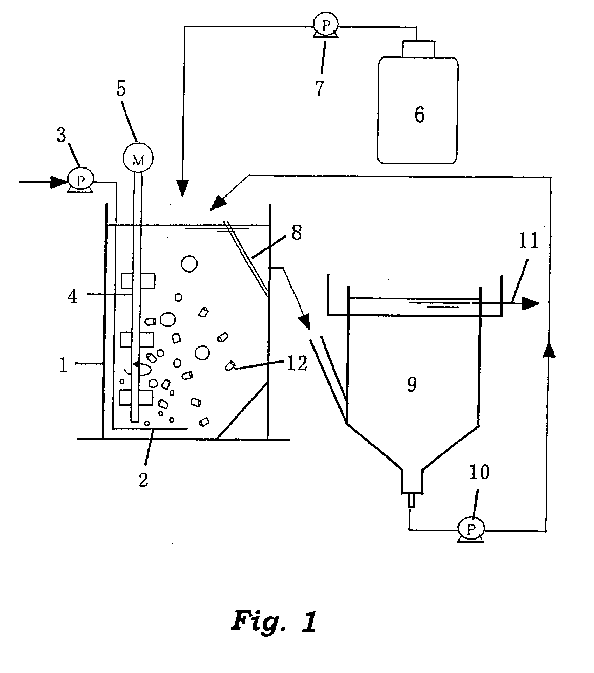

FIG. 1 is a simplified process flow diagram showing one embodiment of a nitrification/denitrification apparatus according to the present invention, wherein the symbols therein shall have the following designations.

1: Biotreatment tank
2: Air diffusion pipe
3: Aeration pump
4: Agitation impeller
5: Agitation motor
6: Raw water tank
7: Liquid transfer pump
8: Carrier separation screen
9: Settling tank
10: Sludge return pump
11: Discharge line
12: Carrier

DETAILED DESCRIPTION OF PREFERRED EMBODIMENTS

The chemical-resistant bioreactor carrier according to the present invention has two embodiments: one contains no inorganic filler, and the other contains therein an inorganic filler.

A water-swellable thermoplastic resin to be used as a component (A) in the chemical-resistant bioreactor carrier according to the present invention is selected from the group consisting of:

(A1) a polyurethane resin prepared by the reaction of diphenylmethane diisocyanate and polyethylene glycol having a molecular weight of 3,000 to 12,000 with or without 1,4-butanediol;
(A2) a cross-linked N-vinylacetamide polymer or copolymer;
(A3) a nonionic polyalkyleneoxide-based thermoplastic resin; and
(A4) a cross-linked product of polyacrylic acid salt.

The polyurethane resin (A1) is preferably prepared by reacting 2 mol of pure diphenylmethane diisocyanate with approximately 1 mol of the above polyethylene glycol, or with approximately 1 mol of the above polyethylene glycol and approximately 0.25 mol of 1,4-butanediol. In the case of reacting the diphenylmethane diisocyanate with the polyethylene glycol and 1,4-butanediol, there can be used either "prepolymer method" in which the polyethylene glycol and the diphenylmethane diisocyanate are first reacted with each other and then reacted with 1,4-butanediol, or "one-shot method" in which all the reactants are mixed at one time.

In the cross-linked N-vinylacetamide polymer or copolymer (A2), the N-vinylacetamide copolymer is prepared by copolymerizing N-vinylacetamide with 50 mol% or less of another ethylene-based unsaturated compound, such as methacrylamide or methylacrylate, in the presence of a cross-linking agent. The cross-linking agent is a compound that has two or more unsaturated bonds in the molecule and exhibits a good copolymerizability to N-vinylacetamide. Such a cross-linking agent is exemplified by tetraallyloxyethane and divinylbenzene. The cross-linking agent may be added to the raw material in such an amount that the molar ratio of the cross-linking agent to the monomer falls within a range of 10 : 90 to 0.0001 : 99.9999. As the cross-linked N-vinylacetamide polymer, there can be used "NA-010" (tradename) commercially available from Showa Denko K. K.

As the nonionic polyalkyleneoxide-based thermoplastic resin (A3), there can be used " AQUACOKE TWB" (tradename) commercially available from Sumitomo Seika Chemicals. Co., Ltd.

As the cross-linked product of polyacrylic acid salt (A4), there can be used "AQUAKEEP SA60N TYPE-ii" (tradename) commercially available from Sumitomo Seika Chemicals. Co., Ltd.

In the chemical-resistant bioreactor carrier according to the present invention, a resin compatible with the water-swellable thermoplastic resin component (A) is added as a component (B) in order to control the degree of volumetric swelling of the carrier. Herein, the compatible resin is defined as a resin that causes substantially no phase separation when the resin components (A) and (B) are blended at an optional ratio and a resultant resin mixture is melted at a temperature higher by 30°C than a melting point of the resin mixture. In the present invention, the compatible resin is selected from the group consisting of:

(B1) a polyether-based elastomer;
(B2) a polyester-based elastomer;
(B3) a ethylene-acrylic acid copolymer resin; and
(B4) acid-modified polyethylene.

As the polyether-based elastomer (B1), there can be used "MOBILON P24T" (tradename) commercially available from Nisshinbo Industries Inc.

As the polyester-based elastomer (B2), there can be used "MOBILON F24T" (tradename) commercially available from Nisshinbo Industries Inc.

As the ethylene-acrylic acid copolymer (B3), there can be used "NOVATEC EAA" (tradename) commercially available from Japan Polychem Corp.

As the acid-modified polyethylene (B4), there can be used "MODIC-AP" (tradename) commercially available from Mitsubishi Chemicals Co., Ltd.

These compatible resins may be used alone or in the form of a mixture of any two or more thereof.

The content ratio of the water-swellable thermoplastic resin component (A) to the compatible resin component (B) varies depending upon the degree of volumetric swelling desirable for the carrier, the degree of volumetric swelling of the water-swellable thermoplastic resin to be used, the type and amount of the inorganic filler and the like, and is generally selected so that the weight ratio of the component (A) to the component (B) falls within a range of 90 : 10 to 10 : 90.

Various combinations of the water-swellable thermoplastic resin component (A) and the compatible resin component (B) are possible. Among such possible combinations, preferred are a combination of the polyurethane resin (A1) and the polyether-based elastomer (B1), a combination of the polyurethane resin (A1) and the polyester-based elastomer (B2), a combination of the cross-linked N-vinylacetamide polymer or copolymer (A2) and the polyether-based elastomer (B1) and a combination of the cross-linked N-vinylacetamide polymer or copolymer (A2) and the polyester-based elastomer (B2).

The degree of volumetric swelling of the chemical-resistant bioreactor carrier according to the present invention, which is represented by the formula (I), is controlled to within a range of 120 to 3,000%. When the degree of volumetric swelling is less than 120%, the water absorbability of the carrier becomes so low as to deteriorate the adhesion of microbes to the carrier. When the degree of volumetric swelling exceeds 3,000%, the strength of the carrier is too lowered to be practically used. In consideration of the adhesion of microbes, the strength of the carrier and the like, the degree of volumetric swelling is preferably in the range of 150 to 1,000%.

$$\text{The degree of volumetric swelling in water (\%)} = \{\text{volume upon complete swelling in water (cm}^3) / \text{volume on bone dryness (cm}^3)\} \times 100 \qquad (I)$$

Herein, the bone dryness is dryness where the weight of the carrier does not decrease any longer when the carrier is dried at 100°C, and the volume of the carrier upon complete swelling in water is the carrier volume which does not change any longer when the carrier is immersed in pure water at 25°C.

An inorganic filler to be used as a component (C) in the chemical-resistant bioreactor carrier according to the present invention is not specifically limited, but may be selected from among barium sulfate, silica, kaolin, quarts sand, diatomaceous earth, barite, talc, alumina, titanium dioxide and iron oxide. These fillers may be used alone or in the form of a mixture of two or more thereof. As will be described hereinafter in the production process of the chemical-resistant bioreactor carrier, the inorganic filler is blended at the time of producing the water-swellable thermoplastic resin and/or at the time of molding for the carrier production.

It is advantageous to use the inorganic filler that has an average particle diameter of preferably 0.1 to 50 $\mu$m, more preferably 0.5 to 30 $\mu$m, and a specific gravity (true specific gravity, and the same applies hereinafter) of preferably at least 1.5, more preferably 2.0 to 6.0. Examples of the specific gravity of the inorganic filler usable in the present invention are 4.3 for barium sulfate; 2.2 for silica; 2.4 for kaolin; 2.56 for quarts sand; 2.15 to 2.31 for diatomaceous earth; 4.5 for barite; 2.6 to 2.8 for talc; 3.99 for alumina; 3.8 to 4.1 for titanium dioxide; and 5.2 for iron oxides.

The content of the inorganic filler, although depending upon the desirable specific gravity of the carrier, the type of the compatible resin, the specific gravity of the inorganic filler and the like, is selected from a range of generally 1 to 350, preferably 10 to 300 parts by weight per 100 parts by weight of the total sum of the components (A) and (B).

The specific gravity of the chemical-resistant bioreactor carrier according to the present invention upon swelling in water is controlled to within a range of 0.98 to 2.12, preferably 0.98 to 1.85, so that the carrier can uniformly flow in a reaction tank when the adhesion and binding immobilization of microbes onto the carrier reach a steady state in the reaction tank.

Herein, the specific gravity of the bioreactor carrier upon swelling in water is obtained from the weight and volume of the carrier on complete swelling in water where the carrier does not change in volume when immersed in pure water at 25°C.

The size and shape of the chemical-resistant bioreactor carrier according to the present invention are not specifically limited, but the carrier is preferably in the form of a regular hexahedron, a column, a sphere or chip having a uniform size for the largest possible outside surface thereof. Specifically preferable forms are a regular hexahedron of 1 to 10 mm in side, a column of 1 to 10 mm in diameter and 1 to 10 mm in length and a sphere of 1 to 10 mm in diameter.

The chemical-resistant bioreactor carrier according to the present invention can be efficiently produced by any of the following processes.

For the production of the bioreactor carrier that contains no inorganic filler, there is used a process in which the compatible resin is blended and melt molded at the time of molding the water-swellable thermoplastic resin so that the resultant carrier has a degree of volumetric swelling controlled to a desirable value.

On the other hand, for the production of the bioreactor carrier that contains therein the inorganic filler, there are used: (1) a process in which the inorganic filler is not added at the time of producing the water-swellable thermoplastic resin, but is added together with the compatible resin at the time of molding the water-swellable thermoplastic resin so that the resultant carrier has a degree of volumetric swelling and a specific gravity upon swelling in water each controlled to desirable values, and then, the mixture is melt molded; (2) a process in which the inorganic filler is added at the time of producing the water-swellable thermoplastic resin so that the resultant carrier has a specific gravity upon swelling in water controlled to a desirable value, the compatible resin alone is added without adding the inorganic filler at the time of molding so that the resultant carrier has a degree of volumetric swelling set to a desirable value, and the mixture is melt molded; and (3) a process in which the inorganic filler is added at the time of producing the water-swellable thermoplastic resin, and is also added together with the compatible resin at the time of molding the water-swellable thermoplastic resin so that the resultant carrier has a degree of volumetric swelling and a specific gravity upon swelling in water each controlled to desirable values, and the mixture is melt molded.

Among the above inorganic fillers, barium sulfate, kaolin, diatomaceous earth and talc, which usually contain moisture, are preferably dehydrated in advance when added at the time of molding, so that the water-swellable resin can be prevented from swelling. Conversely, there is no need to dehydrate any of these fillers when it is added at the time of producing the water-swellable resin.

The melt molding is carried out by heat melting the mixture of the components, extruding the melted mixture into the form of a strand (string) with the use of an extruder, and thereafter cutting the resultant strand into a proper length. For the purpose of enhancing the adhesion of animal cells, plant cells and microbes to the carrier, the mixture of the components can be incorporated, at the time of molding, with an inorganic powder such as activated carbon, carbon powder and zeolite in addition to the above-mentioned inorganic filler for modifying the specific gravity of the carrier. Alternatively, it is possible to adhere the inorganic powder to the surface of the strand extruded from the extruder and then cut the strand.

The chemical-resistant bioreactor carrier according to the present invention, which can be obtained by the above production processes, has a water swelling property, high hydrophilicity, a property of accumulating a large quantity of water and a high affinity for animal cells, plant cells, microbes and/or protozoans. The bioreactor carrier is used by being immersed in a culture solution or water to be treated where animal cells, plant cells, microbes and/or protozoans are present. The bioreactor carrier allows animal cells, plant cells, microbes and/or protozoans such as ammonium oxidizing bacteria, nitrate oxidizing bacteria, other bacteria for nitrifying ammonia, denitrifying bacteria and filamentous bacteria to adhere and to be bindingly immobilized onto the carrier surface because of the extremely high affinity for living matters thereof.

Further, the chemical-resistant bioreactor carrier according to the present invention has high shearing resistance and thus enables efficient agitation by means of an impeller agitator in a state that a large number of animal cells, plant cells, microbes and/or protozoans each serving as biological catalysts are densely immobilized onto the outside surface of the carrier.

In addition, the bioreactor carrier has its specific gravity controlled to within a specific range and thus enables a uniform liquid flow in a reactor tank for efficient microbial reaction and the like.

In the following, some description will be given of the denitrification process for organic waste water according to the present invention.

In the denitrification process of the present invention, nitrogenous components in the organic waste water is nitrified and denitrified by the action of microbes where the above chemical-resistant bioreactor carrier is used as a microbe immobilization carrier.

Ammonia nitrogen in the waste water is converted into nitrate nitrogen by the action of nitrifying bacteria present in activated sludge, while the nitrate nitrogen is converted into gaseous nitrogen by the action of denitrifying bacteria to be released into the atmosphere. However, the nitrifying bacteria are extremely slow at breeding, and the concentration of nitrifying bacteria present in suspended microbe groups i.e. activated sludge is not so high. It is accordingly impossible to treat ammonia nitrogen sufficiently by a conventional activated sludge process for general waste water treatment.

In the activated sludge, there exist such fast breeding bacteria as BOD digesting bacteria. The BOD digesting bacteria predominantly proliferate in the activated sludge, thereby suppressing the proliferation of slow breeding bacteria such as nitrifying bacteria so that the concentration of nitrifying bacteria is low at all times. The bioreactor carrier according to the present invention, when applied to such a system, allows nitrifying bacteria to adhere to the smooth surface of the carrier because of their strong tackiness, but causes such microbes as BOD digesting bacteria that are devoid of strong tackiness to be less prone to adhere to the smooth surface of the carrier. Consequently, the nitrifying bacteria predominantly proliferate at a high rate on the surface of the carrier, whereby the ammonia nitrogen is biologically treated at extremely high efficiency and rate by the action of the predominantly proliferated nitrifying bacteria.

It has been confirmed that the bioreactor carrier according to the present invention, which has physical strength and durability to withstand long-term mechanical agitation and attains a polymeric gel structure upon swelling by water absorption, is capable of firmly and bindingly immobilizing denitrifying bacteria without uneven portions formed thereon. In addition, the bioreactor carrier according to the present invention is usable in both of the nitrification step (i.e. aerobic condition) and the denitrification step (i.e. anaerobic condition), and thus applicable to various denitrifying activated sludge processes. In particular, as compared with a variety of carrier addition recycled nitrification/denitrification processes in which different carriers are each separately added to an anaerobic tank and an aerobic tank, thus needing countercurrent carrier return in each tank, the process according to the present invention can dispense with distinction between an anaerobic carrier and an aerobic carrier and can perform carrier return in the same manner as nitrifying liquid circulation. What is more, the present process is well suited for various intermittent aeration methods and oxidation ditch methods which have hitherto few examples of carrier addition.

It is possible in the present invention, for instance, to alternately and repeatedly utilize the chemical-resistant bioreactor carrier in both the aerobic nitrification condition and the anaerobic denitrification condition by supplying waste water to be treated continuously or intermittently into a treatment tank and alternately and repeatedly switching the treatment condition between the nitrification condition and the denitrification condition in a state that the bioreactor carrier is retained in the treatment tank. There is no restriction on the number of aerobic-to-anaerobic cycles and the time for one aerobic-to-anaerobic cycle.

In the case of using a microbe carrier in the denitrifying activated sludge process, there arise a problem that long-term microbe acclimatization is needed in the early stage of processing. Conventionally, an entrappingly immobilized carrier is utilized in resolving such a problem. However, it is possible in the present invention not only to use the carrier under both the aerobic and anaerobic conditions and attain the microbe carrier having nitrification and denitrification performances, but also to achieve sufficient microbe acclimatization under either condition only, thereby enabling to shorten the acclimatization term.

When the microbe carrier to be used in the present process is acclimatized in a coexistence of activated sludge under an aerobic condition wherein nitrifying bacteria are proliferated, the nitrifying bacteria are thickly grown on the surface of the carrier, and also protozoans such as ciliates are thickly grown thereon as if they cover the bacteria. It has been found by the present inventors that when the aerobic condition is switched to the anaerobic condition wherein denitrifying bacteria are proliferated, the denitrifying bacteria are adsorbed onto the carrier and thereby are firmly immobilized thereon. It has been confirmed that the phenomenon is not limited to one cycle only, and the rises of nitrification and denitrification performances are both accelerated at every time the aerobic and anaerobic conditions are alternately repeated. It is considered to be related to cohesive force among the microbes themselves and the denitrifying bacteria being so-called anaerobic.

In the following, the present invention will be described more specifically with reference to the drawing.

FIG. 1 is a simplified process flow diagram showing one embodiment of a nitrification/denitrification apparatus according to the present invention. In the nitrification/denitrification apparatus, a biotreatment tank 1 is equipped inside with an air diffusion pipe 2, an agitation impeller 4 and a microbe carrier 12. When the inside of the biotreatment tank 1 is brought into an aerobic condition, an aeration pump 3 is operated so that air is blown into the biotreatment tank 1 through the air diffusion pipe 2 for aeration. When the inside thereof is brought into an anaerobic condition, the agitation impeller 4 is operated by the activation of an agitation motor 5 so as to mix raw water (waste water to be treated), activated sludge and the carrier 12 in the biotreatment tank 1. The raw water is fed into the biotreatment tank 1 from a raw water tank 6 by means of a liquid transfer pump 7. Regardless of whether the inside of the biotreatment tank 1 is brought into the aerobic or anaerobic condition, organic matters in the raw water are decomposed by the activated sludge in the biotreatment tank 1 and, at the same time, organonitrogenous components are decomposed into ammonia nitrogen by the action of the microbes immobilized on the carrier 12.

Subsequently when the biotreatment tank 1 is set to the aerobic condition, the ammonia nitrogen begins to be oxidized and converted into nitrate nitrogen and nitrite nitrogen by the action of the nitrifying bacteria bonded to the carrier 12. Subsequently when the biotreatment tank 1 is set to the anaerobic condition, denitrifying bacteria predominate on the surface of the carrier 12 so that the nitrate nitrogen and the nitrite nitrogen are finally decomposed into nitrogen gas by the action of the denitrifying bacteria. The above denitrification treatment is carried out by continuously or intermittently supplying the biotreatment tank 1 with raw water and repeating the aerobic condition and the anaerobic condition alternately.

The treated waste water flows out through overflow from the biotreatment tank 1 to a settling tank 9, while the carrier 12 is always retained in the biotreatment tank 1 by a carrier separation screen 8 so as to maintain the microbe concentration in the biotreatment tank 1 at a high level irrespective of the raw water flow rate. The activated sludge is then separated from the treated waste water by gravity settling in the settling tank 9, and thus only the treated waste water is discharged from a discharge line 11 to the outside of the treatment system. The settled activated sludge is returned to the biotreatment tank 1 via a sludge return pump 10 so as to maintain the MLSS concentration in the biotreatment tank 1. The carrier 12 keeps not only the denitrifying bacteria but also slow breeding nitrifying bacteria at high concentrations, whereby the sludge control in the present process is easier than that of conventional standard processes.

As described above, the process according to the present invention enables nitrification and denitrification in a carrier addition system by intermittent aeration without exchanging the microbe carrier. Without being confined to the intermittent aeration, the denitrification process of the present invention is applicable to various recycled nitrification/ denitrification processes, oxidation ditch processes and the like.

The present invention will be described in more detail with reference to the following examples. However, it should be noted that the following examples are only illustrative and not intended to limit the invention thereto.

Herein, measurements were made of the specific gravity of the carrier upon swelling in water as well as the degree of volumetric swelling of the carrier in the following manners.

(1) Specific gravity upon swelling in water

While immersing a sample in pure water at 25°C, the volume of the sample which did not change any longer was determined as the sample volume upon complete swelling in water. The specific gravity of the carrier upon swelling in water was determined from the sample weight and volume upon complete swelling in water.

(2) Degree of volumetric swelling

The degree of volumetric swelling of the carrier was determined from the above-mentioned formula (I).

(3) Chemical resistance

The chemical resistance of the carrier was determined according to the following procedure based on JIS K7114 "Plastics: Testing method for the determination of the effects of immersion in liquid chemicals" and JIS A4101 "Construction parts of glass fiber reinforced plastic water closet wastes disposal plant".

[1] Make a measurement of a sample weight.
[2] Feed a chemical solution into a sample bottle and heat the solution to a predetermined temperature by the use of a shaker equipped with a thermoregulator.
[3] Put 10 pieces of sample into the sample bottle, and then, shake the bottle at 100 rpm for 5 hours.
[4] Take the sample out of the bottle, wash the sample sufficiently with water, dry and then make a measurement of the sample weight.
[5] Calculate a change in sample weight.

The kinds and temperatures of chemical solutions used are indicated below.

| a | distilled water | 60 ± 2°C |
|---|---|---|
| b | 0.1% sodium hydroxide solution | 60 ± 2°C |

(continued)

| c | 0.1% nitric acid solution | 60 ± 2°C |
| d | 0.1% hypochlorous acid solution | 60 ± 2°C |
| e | 0.1% ammonium water | 20 ± 2°C |

(4) Raw materials

Water-swellable thermoplastic resin

A-1-1: Water-swellable thermoplastic polyurethane resin prepared in REFERENCE EXAMPLE 1
A-1-2: Water-swellable thermoplastic polyurethane resin prepared in REFERENCE EXAMPLE 2
A- 2: Cross-linked N-vinylacetamide polymer available under the tradename of "NA-010" from Showa Denko K. K.
A-3: Nonionic polyalkyleneoxide-based thermoplastic resin available under the tradename of "AQUACOKE TWB" from Sumitomo Seika Chemicals. Co., Ltd.
A-4: Cross-linked sodium polyacrylate available under the tradename of "AQUAKEEP SA60N TYPE-ii" from Sumitomo Seika Chemicals. Co., Ltd.

Compatible resin

B-1: Polyether-based elastomer available under the tradename of "MOBILON P24T" from Nisshinbo Industries Inc.
B-2: Polyester-based elastomer available under the tradename of "MOBILON F24T" from Nisshinbo Industries Inc.
B-3: Ethylene-acrylic acid copolymer available under the tradename of "NOVATEC EAA" from Japan Polychem Corp.
B-4: Acid-modified polyethylene available under the tradename of "MODIC-AP" from Mitsubishi Chemicals Co., Ltd.

Inorganic filler

C-1: Balium sulfate powder (particle size: 0.1 to 15 $\mu$m, average particle size: 9.0 $\mu$m, specific gravity: 4.3)
C-4: Silica power (particle size: 7.0 to 40 $\mu$m, average particle size: 15.0 $\mu$m, specific gravity: 2.2)

REFERENCE EXAMPLE 1

A reaction kettle equipped with an agitator was supplied with 100 parts by weight of polyethylene glycol having a number average molecular weight of 6,000. Then, the polyethylene glycol was preliminarily heated in the reaction kettle at 110°C for 1 hour under a nitrogen gas atmosphere so as to release the moisture in the polyethylene glycol. After the inside of the reaction kettle was set to a temperature of 130°C, 8.33 parts by weight of 4,4-diphenylmethane diisocyanate was fed into the reaction kettle. The resultant mixture was stirred at 130°C for 2 hours, thereby preparing a prepolymer. Then, 0.375 parts by weight of 1,4-butanediol was added, as a chain length extender, to the prepolymer, and the resultant mixture was stirred at 130°C for 1 hour. After the completion of polymerization reaction, the thus-obtained reaction product was casted onto a vat which had been subjected to releasing treatment, followed by heated at 100°C for 4 hours to obtain a water-swellable thermoplastic polyurethane resin (water-swellable thermoplastic resin A-1-1).

REFERENCE EXAMPLE 2

A reaction kettle equipped with an agitator was supplied with 100 parts by weight of polyethylene glycol having a number average molecular weight of 6,000. Then, the polyethylene was preliminarily heated in the reaction kettle at 110°C for 1 hour under a nitrogen gas atmosphere so as to release the moisture in the polyethylene glycol. After the inside of the reaction kettle was set to a temperature of 130°C, 8.33 parts by weight of 4,4-diphenylmethane diisocyanate was fed into the reaction kettle. The resultant mixture was stirred at 130°C for 2 hours. After the completion of polymerization reaction, the thus-obtained reaction product was casted onto a vat which had been subjected to releasing treatment, followed by heated at 100°C for 4 hours to obtain a water-swellable thermoplastic polyurethane resin (water-swellable thermoplastic resin A-1-2).

REFERENCE EXAMPLE 3

The water-swellable thermoplastic polyurethane resin A-1-1 obtained in REFERENCE EXAMPLE 1 was cooled, crushed into small pieces, heat melted at 180 to 230°C under shearing force with the use of a heating extruder, and extruded through a nozzle of the heating extruder to prepare a strand of 2.5 mm in diameter. The strand was cut into column-shaped carriers of 2.5 mm in length. Then, measurements were made of the specific gravity upon swelling in water, the degree of volumetric swelling and the acid resistance of the thus-obtained carrier. The results are shown in TABLE 1.

EXAMPLE 1

The same procedure as in REFERENCE EXAMPLE 3 was repeated to obtain a bioreactor carrier, except that a mixture of 50 parts by weight of the water-swellable thermoplastic polyurethane resin A-1-1 and 50 parts by weight of the compatible resin B-1 was used instead of the water-swellable thermoplastic polyurethane resin A-1-1. Measurements were made of the specific gravity upon swelling in water, the degree of volumetric swelling and the acid resistance of the thus-obtained carrier. The results are shown in TABLE 1.

EXAMPLES 2 to 12

The same procedure as in EXAMPLE 1 was repeated to obtain bioreactor carriers, except that the kinds and amounts of the water-swellable thermoplastic resin and the compatible resin were varied as listed in TABLE 1. Then, measurements were made of the specific gravity upon swelling in water, the degree of volumetric swelling and the acid resistance of the thus-obtained carriers. The results are shown in TABLE 1.

EXAMPLE 13

The same procedure as in REFERENCE EXAMPLE 3 was repeated to obtain a bioreactor carrier, except that the water-swellable thermoplastic resin A-1-1, the compatible resin B-1 and dehydrated barium sulfate powder were blended in such amounts as listed in TABLE 1. Then, measurements were made of the specific gravity upon swelling in water, the degree of volumetric swelling and the acid resistance of the thus-obtained carrier. The results are shown in TABLE 1.

EAMPLES 14 to 16

The same procedure as in EXAMPLE 13 was repeated to obtain bioreactor carriers, except that the kinds and amount of the water-swellable thermoplastic resin, the compatible resin and the inorganic filler were varied as listed in TABLE 1. Measurements were made of the specific gravity upon swelling in water, the degree of volumetric swelling and the acid resistance of the thus-obtained carriers. The results are shown in TABLE 1.

[0038]

TABLE 1

|  |  | Resin components |  |  |  | Inorganic filler |  |
|---|---|---|---|---|---|---|---|
|  |  | Water-swellable thermoplastic resin |  | Compatible resin |  |  |  |
|  |  | Type | Parts by weight | Type | Parts by weight | Type | Parts by weight |
| REFERENCE EXAMPLE 3 |  | A-1-1 | 100 | - | - | - | - |
| EXAMPLES | 1 | A-1-1 | 50 | B-1 | 50 | - | - |
|  | 2 | A-1-1 | 20 | B-1 | 80 | - | - |
|  | 3 | A-1-1 | 50 | B-2 | 50 | - | - |
|  | 4 | A-1-1 | 20 | B-2 | 80 | - | - |
|  | 5 | A-1-2 | 20 | B-1 | 80 | - | - |
|  | 6 | A-1-2 | 20 | B-2 | 80 | - | - |
|  | 7 | A-1-1 | 20 | B-3 | 80 | - | - |
|  | 8 | A-2 | 20 | B-1 | 80 | - | - |
|  | 9 | A-2 | 20 | B-2 | 80 | - | - |
|  | 10 | A-3 | 20 | B-1 | 80 | - | - |
|  | 11 | A-3 | 20 | B-3 | 80 | - | - |
|  | 12 | A-4 | 20 | B-1 | 80 | - | - |
|  | 13 | A-1-1 | 50 | B-1 | 50 | C-1 | 20 |
|  | 14 | A-1-1 | 20 | B-1 | 80 | C-1 | 40 |
|  | 15 | A-1-1 | 50 | B-1 | 50 | C-2 | 20 |
|  | 16 | A-1-1 | 20 | B-1 | 80 | C-2 | 40 |

TABLE 1 (continued)

| | | Physical properties of carrier | | Chemical resistance of carriers [Weight decreasing rate (%) *1] | | | | |
|---|---|---|---|---|---|---|---|---|
| | | Specific gravity of swelling in water | Degree of volumetric swelling (%) | a | b | c | d | e |
| REFERENCE EXAMPLE 3 | | 1.01 | 850 | -5 | -1 | 5 | 100 | -5 |
| EXAMPLES | 1 | 1.05 | 310 | 2 | -10 | -5 | 10 | -5 |
| | 2 | 1.07 | 170 | 0.5 | -5 | -1 | -10 | -0.5 |
| | 3 | 1.05 | 300 | 3 | -10 | -5 | 10 | -5 |
| | 4 | 1.07 | 160 | 0.5 | -5 | -1 | -10 | -0.5 |
| | 5 | 1.06 | 190 | 0.5 | -5 | -1 | -10 | -0.5 |
| | 6 | 1.06 | 180 | 0.5 | -5 | -1 | -10 | -0.5 |
| | 7 | 0.99 | 120 | 0 | -0.5 | 0 | -0.5 | 0 |
| | 8 | 1.04 | 190 | 0.5 | -5 | -1 | -5 | -0.5 |
| | 9 | 1.04 | 190 | 0.5 | -5 | -1 | -5 | -0.5 |
| | 10 | 1.04 | 200 | 0.5 | -5 | -1 | -10 | -0.5 |
| | 11 | 0.99 | 120 | 0 | 0 | 0 | 0 | 0 |
| | 12 | 1.04 | 200 | 0.5 | -5 | -1 | -10 | -0.5 |
| | 13 | 1.15 | 300 | 0 | 0.2 | 0.2 | 0.2 | 0 |
| | 14 | 1.31 | 130 | 0 | 0.5 | 0.5 | 0.5 | 0 |
| | 15 | 1.15 | 300 | 0 | 0.2 | 0.2 | 0.2 | 0 |
| | 16 | 1.28 | 130 | 0 | 0.5 | 0.5 | 0.5 | 0 |

*1   Weight increase is indicated by a minus sign.

EXAMPLE 17 (Nitrification/denitrification test with the carrier)

By the use of the carrier obtained in EXAMPLE 1 in the nitrification/denitrification apparatus as illustrated in FIG. 1, raw water having the following composition was subjected to intermittent aeration treatment under the following operation conditions.

| Composition of raw water | Concentration (mg/L) |
|---|---|
| Glucose | 61.8 |
| L-glutamic acid | 61.8 |
| Ammonium chloride | 93.2 |
| $KH_2PO_4$ | 4.3 |
| $CaCl_2 \cdot 2H_2O$ | 46.3 |
| $MgSO_4 \cdot 7H_2O$ | 32.4 |
| $ZnCl_2$ | 0.208 |
| $FeSO_4 \cdot 7H_2O$ | 1.0 |
| EDTA·2Na | 1.8 |
| $CuSO_4 \cdot 5H_2O$ | 0.51 |
| $MnCl_2 \cdot 4H_2O$ | 0.572 |
| $Na_2MoO_4 \cdot 2H_2O$ | 0.05 |
| $CoCl_2 \cdot 6H_2O$ | 0.008 |

Operation conditions

| | |
|---|---|
| Volume of biotreatment tank | 20 liters |
| Carrier | 4 liters of the carrier prepared in EXAMPLE 1 |
| Aeration cycle | One cycle included 3 hours of aerobic aeration and 3 hours of an aerobic aeration. In aerobic aeration, the concentration of dissolved oxygen was controlled to 6 mg/L. Raw water was stirred with an impeller in anaerobic aeration. |
| Raw water flow | 6.67 L/hr (80L/hr) only during anaerobic aeration |
| Retention time | 6.0 hours |
| Nitrogen concentration in raw water | 30 mg-N/L |
| Nitrogen load | 0.12 kg-N/$m^3$-tank • day |
| Sludge return | Sludge was returned so as to attain MLSS concentration of 2,000 mg/L. |
| Water temperature | 22°C |

The average quality of treated water, obtained on the 60th day or later of test, is shown in TABLE 2.

COMPARATIVE EXAMPLE 1 (Nitrification/denitrification test with no carrier)

The same procedure as in EXAMPLE 17 was repeated, except that no carrier was added into the biotreatment tank and MLSS concentration was set to 3,000 to 3,500 mg/L. The average quality of treated water, obtained on 60th day or later of test, is shown in TABLE 2.
In this test, sludge float was observed in the settling tank on 10th day or later of test, causing a spill of SS components. Further, the quality of treated water on 60th day or later of test was unstable in both nitrification and denitrification. The T-N removal rate was about 80%.

TABLE 2

| | Raw Water | Treated water in EXAMPLE 17 | Treated water in COM. EXAMPLE 1 |
|---|---|---|---|
| T-BOD (mg/L) | 100 | 4.0 | 5.8 |
| T-N (mg/L) | 30 | 2.4 | 5.9 |
| $NH_4$-N (mg/L) | 24.4 | < 0.1 | 1.8 |
| $NO_3$-N + $NO_2$-N (mg/L) | ND | 1.0 | 3.9 |

As described above, the chemical-resistant bioreactor carrier according to the present invention has a suitable water swelling property, a suitable degree of volumetric swelling and a suitable specific gravity and exhibits excellent chemical resistance to be suitable for use in the microbial treatment of organic waste water having a high chemical content. Further, the chemical-resistant bioreactor carrier according to the present invention not only attains a high physical strength but also can be easily manufactured.

With the use of the chemical-resistant bioreactor carrier according to the present invention as a microbe immobilization carrier, it is possible to purify organic waste water having a high chemical content by the microbial nitrification and denitrification of nitrogenous components in the organic waste water.

## Claims

1.  A chemical-resistant bioreactor carrier, comprising:

    (A) a water-swellable thermoplastic resin selected from the group consisting of:

       (A1) a polyurethane resin prepared by the reaction of diphenylmethane diisocyanate and polyethylene glycol having a molecular weight of 3,000 to 12,000 with or without 1,4-butanediol;
       (A2) a cross-linked N-vinylacetamide polymer or copolymer;
       (A3) a nonionic polyalkyleneoxide-base thermoplastic resin; and
       (A4) a cross-linked product of polyacrylic acid salt, and

    (B) a resin compatible with the water-swellable thermoplastic resin component (A), selected from the group consisting of:

       (B1) a polyether-based elastomer;
       (B2) a polyester-based elastomer;
       (B3) an ethylene-acrylic acid copolymer resin ; and
       (B4) an acid-modified polyethylene,

    wherein the degree of volumetric swelling of said carrier is controlled to within the range of 120 to 3,000%.

2.  The chemical-resistant bioreactor according to Claim 1, further comprising (C) an inorganic filler,
    wherein the specific gravity of said carrier upon swelling in water is controlled to within the range of 0.98 to 2.12.

3.  The chemical-resistant bioreactor according to Claim 2, wherein the inorganic filler (C) has an average particle size of 0.1 to 50 μm and a specific gravity of 1.5 or more.

4.  The chemical-resistant bioreactor carrier according to Claim 2, wherein the inorganic filler (C) is contained in an amount of 1 to 350 parts by weight based on 100 parts by weight of the total amount of the resins (A) and (B).

5.  The chemical-resistant bioreactor carrier according to Claim 1, wherein the weight ratio of the resin (A) to the resin (B) falls within the range of 90 : 10 to 10 : 90.

6.  A process for the production of a chemical-resistant bioreactor carrier having a degree of volumetric swelling controlled to within the range of 120 to 3,000%, the process comprising the steps of:

    blending the water-swellable thermoplastic resin (A) as set forth in Claim 1 with the compatible resin (B) as set forth in Claim 1;
    heat melting the resultant blend;
    extruding the melted blend into the form of a strand by means of an extruder; and
    continuously cutting the strand.

7.  A process for the production of a chemical-resistant bioreactor carrier having a degree of volumetric swelling controlled to within the range of 120 to 3,000% and a specific gravity upon swelling in water controlled to within the range of 0.98 to 2.12, the process comprising the steps of:

    blending the water-swellable thermoplastic resin (A) as set forth in Claim 1, the compatible resin (B) as set forth in Claim 1, and an inorganic filler (C);
heat melting the resultant blend;
extruding the melted blend into the form of a strand by means of an extruder; and
continuously cutting the strand.

8. A process for the production of a chemical-resistant bioreactor carrier having a degree of volumetric swelling controlled to within the range of 120 to 3,000% and a specific gravity upon swelling in water controlled to within the range of 0.98 to 2.12, the process comprising the steps of:

blending the water-swellable thermoplastic resin (A) as set forth in Claim 1 in which an inorganic filler is added at the time of producing the resin (A) with the compatible resin (B) as set forth in Claim 1 or with the compatible resin (B) as set forth in Claim 1 and an inorganic filler (C);
heat melting the resultant blend;
extruding the melted blend into the form of a strand by means of an extruder; and
continuously cutting the strand.

9. A process for purifying organic waste water with a high chemical content by microbial nitrification and denitrification of nitrogen components in the organic waste water, wherein the chemical-resistant bioreactor carrier as set forth in Claim 1 is used as a microbe immobilization carrier.

10. The process according to Claim 9, wherein the bioreactor carrier as set forth in Claim 1 is used repeatedly and alternately in the nitrification and the denitrification.

*Fig. 1*